# EUROPEAN PATENT SPECIFICATION

(11) **EP 3 892 430 B1**
(45) Date of publication and mention of the grant of the patent: **05.10.2022**
(21) Application number: 21167233.2
(22) Date of filing: 07.04.2021
(51) Int. Cl.: B28D 1/22, C03B 33/12

(54) **TOOL HOLDER WITH REVOLVER-LIKE CARRIER FOR PLANAR SHEET ENGRAVING EQUIPMENT**
WERKZEUGHALTER MIT REVOLVERARTIGEM TRÄGER FÜR FLACHE BLATTGRAVIERVORRICHTUNGEN
PORTE-OUTIL DOTÉ D'UN SUPPORT DE TYPE REVOLVER POUR ÉQUIPEMENT DE GRAVURE DE FEUILLES PLANES

(30) Priority: 09.04.2020 IT 202000007609
(43) Date of publication of application: 13.10.2021
(73) Proprietor: Brevetti Montolit S.P.A., 21050 Cantello (Varese) (IT)
(72) Inventor: CASARTELLI, Luigi, 21050 CANTELLO VA (IT); MONTOLI, Vincenzo, 21050 CANTELLO VA (IT)
(74) Representative: Faggioni, Carlo Maria

(56) References cited:
- US-A- 911 342
- US-A- 1 419 310
- US-A- 1 578 477
- US-A- 2 853 907
- US-A- 4 028 801

## Description

### BACKGROUND OF THE INVENTION

### Field of the invention

The present invention relates to a tool holder for an engraving equipment of planar sheets, such as tiles, stone material, glass, or even other materials. In particular, the invention relates to an improved tool holder equipped with multiple interchangeable engraving tools.

### Prior art

In the activity of laying and installing tiles on floors and walls, but more in general of planar sheets, equipment for the surface engraving of the material is commonly used. Engraving equipment is commonly used to practice engraving lines on surfaces of tiles/slabs with the purpose of severing said tiles/slabs.

Manual tile-cutting machines are well-known in the field, which comprise tool-holder devices slidably mounted on suitable guides and led by hand during the engraving step.

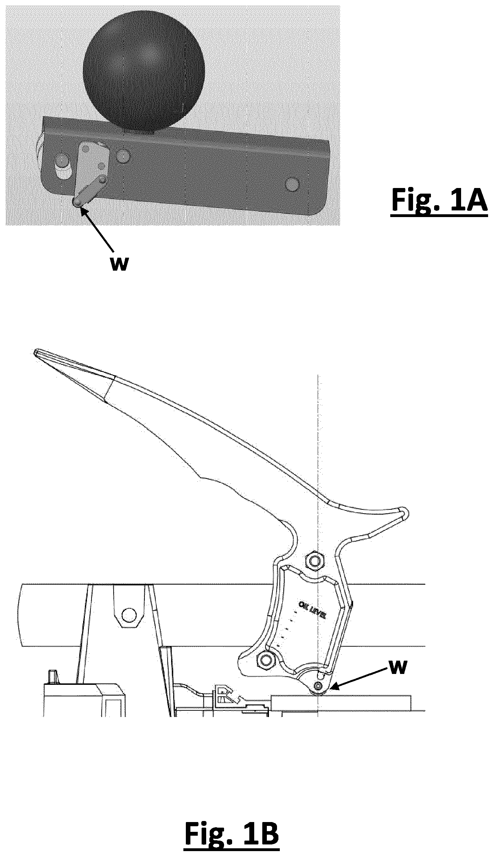

In figs. 1A and 1B two exemplifying slidable tool-holder devices are shown: the former is in the shape of a multiple-wheel carriage - as illustrated for example in EP2998089 in the name of the same Applicant - while the latter consists of a conventional tile-cutting machine handle, mounted on a sliding bar. Typically, this prior-art equipment comprises an engraving tool in the lower part, for example a wheel of very hard material such as widia, which is caused to slide with high pressure on the material surface to be engraved. In figs. 1A and 1B the engraving tool is marked by the letter W.

Since the engraving tool, such as the widia wheel W, tends to wear and deteriorate with use, certain tools are provided on a mounting system which allows the replacement thereof.

However, it is a common experience for users that the replacement systems of widia wheels are not particularly easy to operate. Moreover, it has been noticed that it is wished to replace the engraving tool not only when it is worn, but also according to the material to be engraved, for example changing - depending on circumstances - changing the type of tool material, the geometric shape of the cutter, the diameter of the wheel and so on.

It would hence be desirable to be able to have a replacement system of the engraving tool which is easier to operate than what is available in the prior art, especially for quickly changing the type of tool.

In the field of manual glasscutters, partial solutions to the wear problem of the engraving tools have already been suggested. Some examples are described in US3221405, US1419310, EP2454. These documents disclose a small carrier, which carries a plurality of identical engraving wheels, mounted so as to be able to take up different stable positions, exposing each time a different fresh wheel and bringing into an idle position the worn wheels. These layouts provide a single tightening means, which is loosened in order to move the position of the carrier and then locked again to cause the tool to operate.

However, some drawbacks occur, since the only tightening means may come loose, impairing regular operation; moreover, once the available wheels are worn out, the entire carrier must be replaced or the tool must be replaced. Finally, in the field of glass these carrier devices maintain a good functionality, but in the aggressive environments where the machines for floor tiles and wall tiles operate, they are subject to jams and do not provide any opportunity for maintenance or partial replacement of the tools.

Similar revolving tool carriers are disclosed in US4028801, US1578477, US911342, US2853907.

The need is therefore felt to provide a solution which allows to have various engraving tools on the same tool holder, offering at the same time ease of replacement and of maintenance.

### SUMMARY OF THE INVENTION

The above reported object is achieved, according to the present invention, with a tool holder provided with revolver-like carrier which has the features defined in claim 1. Other preferred features of such solution are defined in the dependent claims.

### BRIEF DESCRIPTION OF THE DRAWINGS

Further features and advantages of the solution according to the present invention will in any case be more evident from the following detailed description of a preferred embodiment of the same, provided purely as a non-limiting example and illustrated in the attached drawings, wherein:
figs. 1A and 1B, as anticipated, are elevation side views of two prior-art tool-holders;

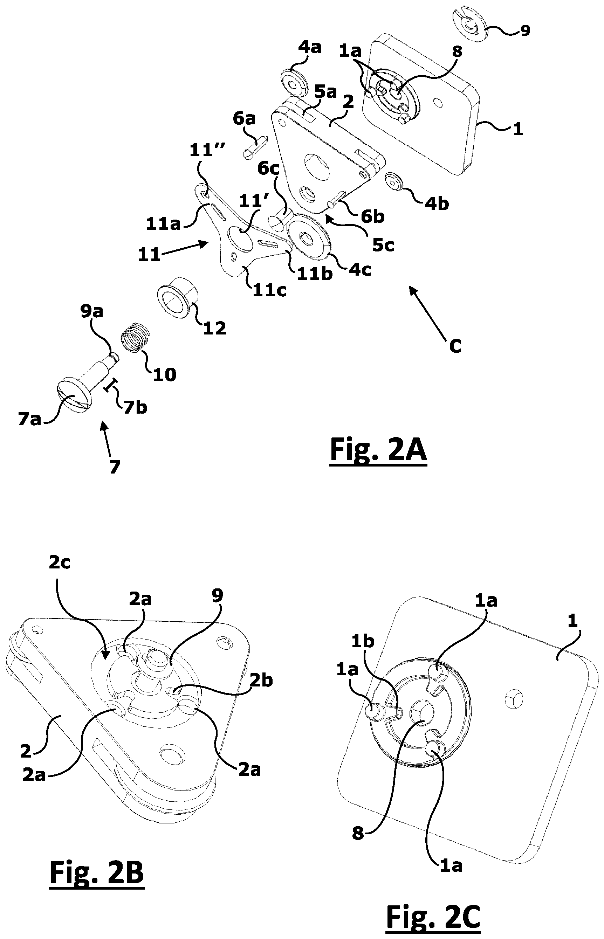

fig. 2A is an exploded view of a revolver-like tool-holder according to the invention;
fig. 2B is a perspective view of a revolver-like body of the carrier according to the embodiment of fig. 2A;
fig. 2C is a perspective view of a small support base of the carrier according to the embodiment of fig. 2A;
fig. 3A is an elevation side view of the carrier of fig. 2A assembled and locked closed in an operating condition;
fig. 3B is a perspective view with parts removed of the carrier in the condition of fig. 3A;
fig. 4A is an elevation side view of the carrier of fig. 2A in an assembled and released condition;
fig. 4B is a perspective view with parts removed of the carrier in the condition of fig. 4A;
fig. 5A is an elevation side view of the carrier of fig. 4A elastically opened to change tool;
figs. 5B and 5C are perspective views of the carrier in a tool-changing condition;
fig. 6A is a perspective view of the carrier of fig. 4A elastically opened to replace the tools; and
fig. 6B is a similar view to that of fig. 6A with the tools disassembled.

### DETAILED DESCRIPTION OF THE PREFERRED EMBODIMENT

A tool-holder device (not shown) of a manual tile-cutting machine is equipped - in a manner known per se - with an engraving tool, typically a hard metal wheel, such as widia.

In particular, the tool-holder device is equipped with a carrier C wherein a plurality of engraving tools is provided, for example three. The carrier C is fastened to the lower part of the tool-holder device in any suitable manner, for example by welding or riveting or by other fastening means.

According to the invention, carrier C consists of a support base 1 - attached to the tool-holder device - whereon a revolver-like body 2 is rotatably mounted which holds two or more engraving tools 4a-4c. These engraving tools are in the shape of wheels 4a-4c with parallel rotation axes, mounted in respective housing seats 5a-5c arranged at protruding portions of the revolver-like body 2, in particular at the corners of a generically polygonal shape (triangular in the case of three tools as in the drawings).

The engraving wheels 4a-4c are retained in the respective seats 5a-5c by retaining pins 6a-6c which are apt to be fitted into and removed from respective housing holes. The removable retaining pins 6a-6c have an enlarged end, meant to abut against an inlet aperture of the housing holes, so as to be maintained axially in position.

Wheels 4a-4c are of a different diameter and also, possibly, shape and material.

The revolver-like body 2 is rotatably mounted on support base 1 by means of a rotation spindle 7 which is fitted into a through-hole 8 of base 1 and axially retained (so that it cannot slip off) by means of a rear holding ring 9, such as a seeger ring or the like, which engages with a corresponding groove 9a at the distal end of spindle 7.

Spindle 7 furthermore has a head 7a, by means of which it retains revolver-like body 2 against base 1. A short portion 7b of spindle 7 is threaded and is meant to engage with a nut provided in the through-hole 8.

The axial coupling between base and revolver-like body 2 is hence guaranteed by rotation spindle 7. Instead, a rotation preventing coupling between base 1 and revolver-like body 2 is ensured by a plurality of pins 1a and radial reliefs 1b, which protrude axially from base 1 and insert into corresponding gripping holes 2a and radial recesses 2b provided in revolver-like body 2. According to the embodiment shown, pins 1a protrude more than radial reliefs 1b, which are of equal height with a circular rim 1c. Accordingly, radial recesses 2b are obtained on an inner disc of a circular groove 2c found on revolver-like body 2, wherein pins 1a can slide during the mutual rotation between base 1 and revolver-like body 2.

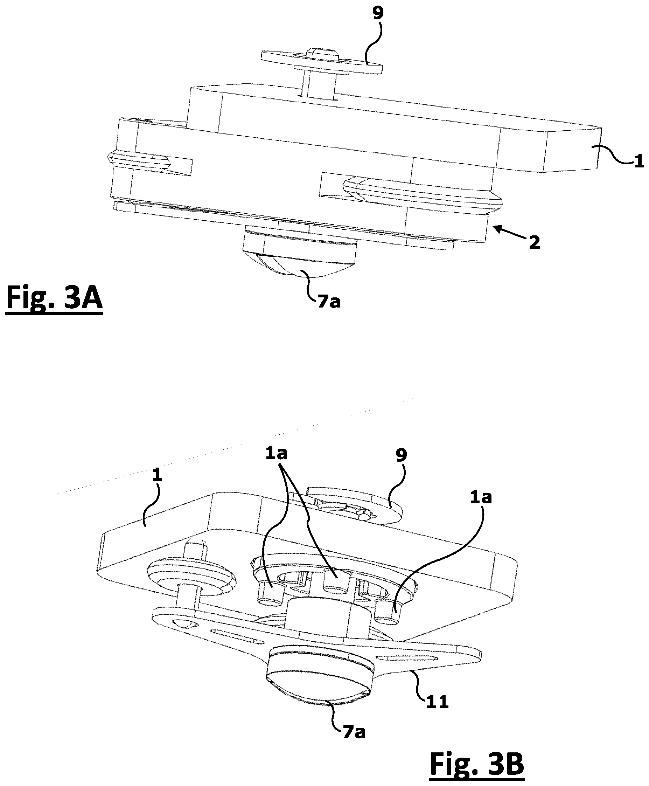

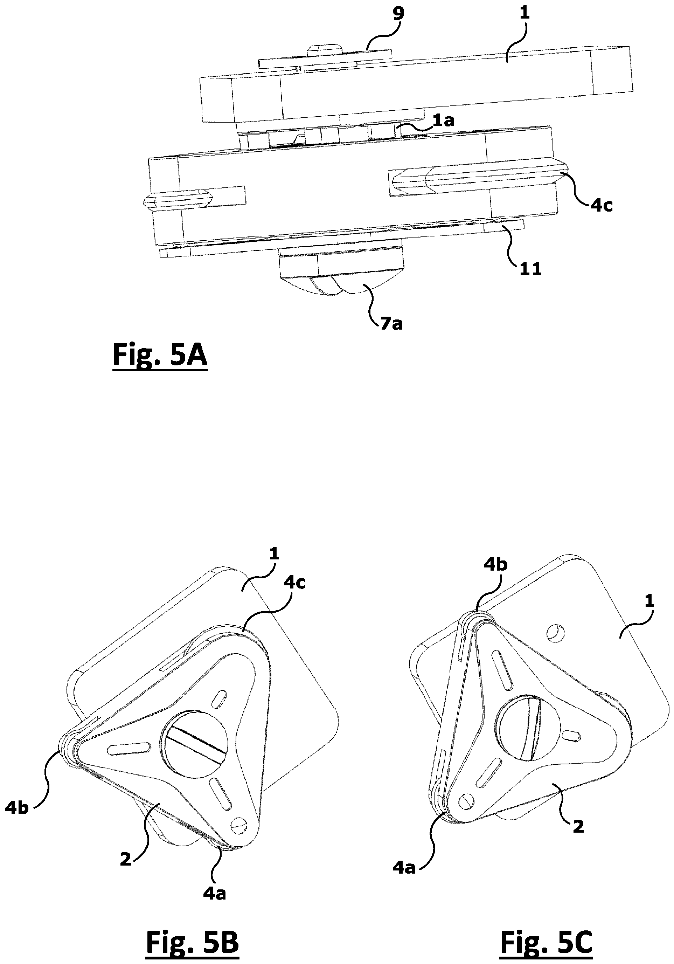

When base 1 and the revolver-like body are adjacent each other (for example fig. 3A), pins 1a and radial reliefs 1b are engaged with holes 2a and with recesses 2b, respectively, and mutual rotation is prevented. When base 1 and revolver-like body 2 are mutually apart (for example fig. 5A), pins 1a and radial reliefs 1b fully come out from holes 2a and from recesses 2b and a relative rotation around rotation spindle 7 is possible.

The radial distance between pins 1a and spindle 7 is the same; also, the circumferential distance between pins 1 each other is the same. Accordingly, stable coupling positions can be identified between base 1 and revolver-like body 2 every 360/N degrees, where N is the number of pins 1 and tools.

According to a peculiar feature of the invention, between the head 7a of rotation spindle 7 and revolver-like body 2 a biasing spring 10 is provided, which imparts an elastic action intended to push 'packet-wise' revolver-like body 2 against base 1.

Preferably, moreover, between the head 7a of spindle 7 and revolver-like body 2 a retaining plate 11 is provided, meant to abut against the enlarged ends of retaining pins 6a-6c to keep them in position without allowing the removal thereof from the respective holes. Also retaining plate 11 is rotatably mounted on spindle 7: for such purpose it has a central hole 11', preferably equipped with a flanged cylindrical bush 12 against which spring 10 abuts.

Preferably, retaining plate 11 is star-shaped, with a number of arms 11a-11c equal to the number of tools, which arms rest on the enlarged ends of pins 6a-6c to push them and retain them in the housing hole thereof. At least one of arms 11a-11c furthermore has a recess 11" meant to engage with the enlarged head of a respective pin 6a and prevent the rotation of the star-shaped plate 11 with respect to revolver-like body 2.

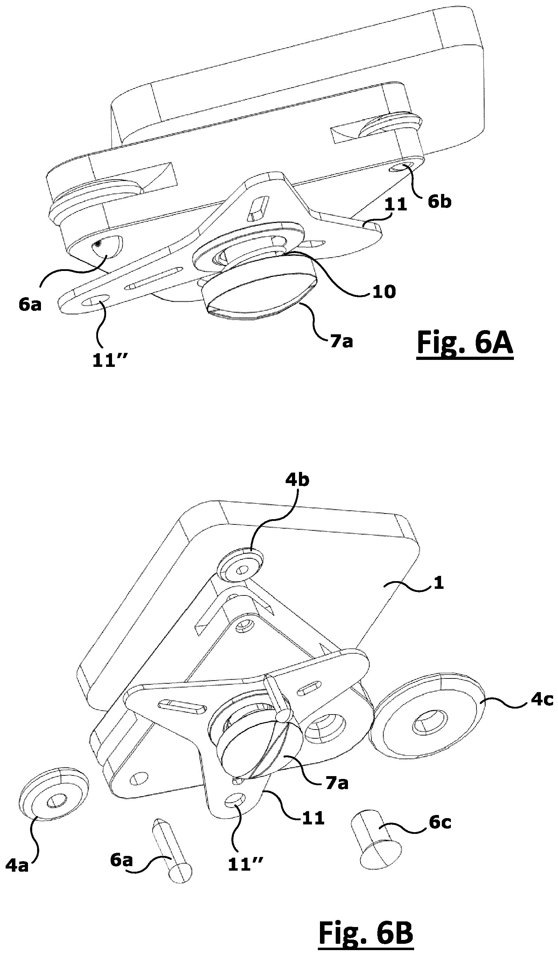

Typically, retaining plate 11 can take up two different rotation positions: one wherein it maintains pins 6a-6c in respective housing holes (for example see figs. 5B and 5C), and one wherein it releases the enlarged ends of pins 6a-6c and allows the removal of the tools (for example see figs. 6A and 6B).

As can be seen also with the help of the drawings, the carrier according to the invention has two peculiar features. On the one hand, it is provided that revolver-like body 2, which holds tools 4a-4c, is coupled with support base 1 by means of a rotation spindle 7 by arranging in between elastic biasing means 10. On the other hand, tools 4a-4c are constrained to the seat 5a-5c thereof by removable retaining pins 6a-6c which - according to a preferred embodiment - are kept in position by a retaining plate 11 also pushed against revolver-like body 2, by rotation spindle 7 with the arrangement in between of elastic biasing means 10.

The operation of carrier C hence provides the opportunity to easily change the tool being used, by rotating revolver-like body 2, as well as to easily replace the tools from carrier C.

Figs. 3A and 3B show an operating condition of carrier C, wherein spindle 7 is screwed fully. Threaded portion 7b is screwed fully in the hole 8 and the end holding ring 9 protrudes from the rear side of base 1. Spring 10 is fully compressed and revolver-like body 2 is securely coupled with base 1. Any relative rotation of the components is prevented, even under stress due to the pressure action imparted manually during the engraving of a tool against the operating surface (not shown).

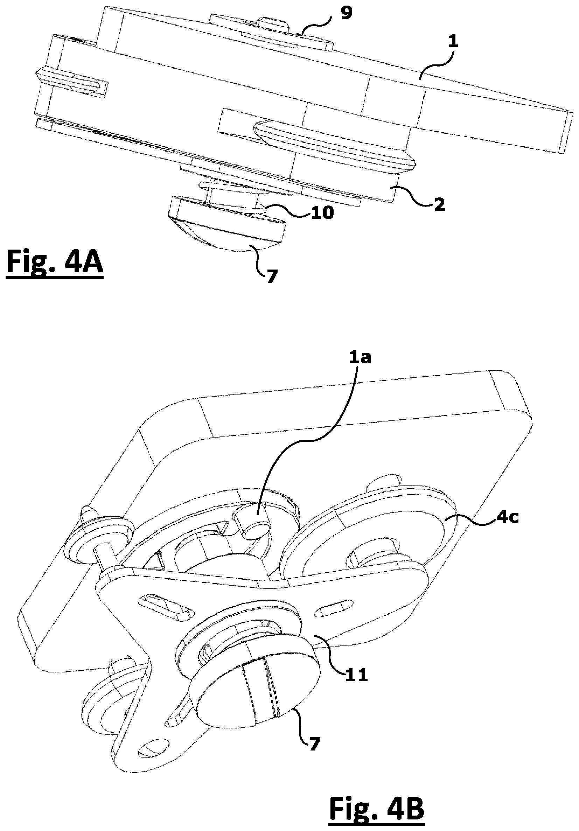

In figs. 4A and 4B a condition is shown wherein spindle 7 is fully loosened and the carrier is ready for a change. Holding ring 9 abuts on the rear side of the base 1, preventing the full slipping off of spindle 7. Spring 10 is extended but imparts a bias force sufficient to keep plate 11 still against revolver-like body 2 and said body coupled against base 1. From this condition, a user can act to change the position of tools 4a-4c, changing the one in position of use, or to replace the individual tools from the seat thereof.

Acting on revolver-like body 2 and overcoming the contrast action of spring 10, it is possible to axially displace away revolver-like body 2 from base 1 (fig. 5A), until withdrawing pins 1a from respective holes 2a and hence be able to produce a relative rotation between the two. Thereby the user can rotate revolver-like body 2 and shift the tools (see the comparison between figs. 5B and 5C), until bringing the desired tool in the position of use.

If instead one acts on retaining plate 11, displacing it away from revolver-like body 2, it is possible to disengage recess 11" from the enlarged end of pin 6a and hence cause a rotation of plate 11 with respect to revolver-like body 2, for example as shown in fig. 6A. In this condition, retaining pins 6a-6c can be removed from the respective holes and hence release wheels 4a-4c which can be easily replaced.

As can be guessed from the above-reported description, the innovative layout of the carrier according to the invention perfectly achieves the objects set forth in the premises.

As a matter of fact, due to the presence of rotation spindle 7 cooperating with spring 10, it is possible to achieve at the same time three different conditions: a fully operating locked condition, an unconstrained tool-changing position, and an unconstrained tool-replacing condition. The two unconstrained conditions make the tool changing as well as tool replacing operation very easy.

The presence of spring 10, moreover, reduces the risk of an undesired loosening of pin 7 and nevertheless guarantees a taking up of any slack which ensures a full functionality of the device in any condition.

It is understood that the invention must not be considered limited to the particular embodiment shown, but that different variants are possible, all within the reach of a person skilled in the field, without departing from the scope of protection of the invention, which is only defined by the following claims.

For example, although in the description reference has always been made to a revolver-like body with three tools and a star-shaped retaining plate, it is not ruled out to be able to also support two tools only or four tools or more, also depending on the bulk of each of them and on the space available on the tool-holding device for the mounting of the carrier. In the case of two tools, the retaining plate could be simply rectangular. In any case, the retaining plate could be divided into multiple separate elements.

Moreover, the retaining means of the tools could also be simply removable pins locked in position in some other way, without using a retaining plate.

Moreover, the most widespread tools are certainly hard metal wheels, but it is not ruled out that the principles taught here are applicable to engraving tools of a different shape.

Finally, it is not ruled out that the elastic means can be more than one, for example to differentiate the elastic force imparted towards a revolver-like body 2 and towards retaining plate 11.

## Claims

1. Tool-holder for a manual engraving machine, comprising a carrier (C) equipped with at least a revolver-like body (2) rotatably mounted with respect to a support base (1) by means of a tightening rotation spindle (7) and equipped with a plurality of engraving tools (4a-4c) fastened by means of tool retaining means (6a-6c), **characterised in that**
said revolver-like body (2) is axially displaceable with respect to said support body (1) and pushed against said support body (1) by first elastic biasing means (10, 12) constrained by said rotation spindle (7), **in that**
between said support base (1) and said revolver-like body (2) preventing rotation coupling means (1a, 2a, 1b, 2b) are provided, apt to be released by axial displacement along said rotation spindle (7), and **in that**
said tool retaining means (6a-6c) are removable.

2. Tool holder as in 1, wherein said retaining means (6a-6c) are kept in position by a retaining plate (11) pushed against said revolver-like body (2) by second elastic biasing means constrained by said rotation spindle (7).

3. Tool holder as in 2, wherein said retaining plate (11) is rotatably mounted around said rotation spindle (7).

4. Tool holder as in 3, wherein said retaining plate (11) has a star shape with arms (11a-11b) in a number equal to the number of tools (4a-4c).

5. Tool holder as in 2, 3 or 4, wherein said tool retaining means (6a-6c) are removable rivets kept inserted in respective seat holes by said retaining plate (11).

6. Tool holder as in any one of the preceding claims, wherein said revolver-like body (2) is of a polygonal shape and holds said tools (4a-4c) at the vertexes of a polygonal shape.

7. Tool holder as in any one of the preceding claims, wherein said rotation spindle (7) is engaged with a through-hole (8) of said support base (1) and is equipped with a holding ring (9) on a rear side of said support base (1).

8. Tool holder as in any one of the preceding claims, wherein said first elastic biasing means are in the shape of a helical spring (10) constrained between a head (7a) of said rotation spindle (7) and a flanged bush (12).

9. Tool holder as in claim 2, wherein said first elastic biasing means (10) and said second elastic biasing means coincide.

## Patentansprüche

1. Werkzeughalter für eine manuelle Graviermaschine, umfassend einen Träger (C), der mit mindestens einem revolverartigen Körper (2) ausgestattet ist, der in Bezug auf eine Stützbasis (1) mittels einer Festziehrotationsspindel (7) drehbar montiert ist und mit mehreren Gravierwerkzeugen (4a-4c) ausgestattet ist, die mittels Werkzeughaltemitteln (6a-6c) befestigt sind, **dadurch gekennzeichnet, dass**
der revolverartige Körper (2) in Bezug auf den Trägerkörper (1) axial verschiebbar ist und durch erste elastische Vorspannmittel (10, 12), die durch die Rotationsspindel (7) eingeschränkt sind, gegen den Trägerkörper (1) gedrückt wird, dadurch, dass
zwischen der Trägerbasis (1) und dem revolverartigen Körper (2) Kopplungsmittel zum Verhindern einer Rotation(1a, 2a, 1b, 2b) vorgesehen sind, die geeignet sind, durch axiale Verschiebung entlang der Rotationsspindel (7) freigegeben zu werden, und dadurch, dass
die Werkzeughaltemittel (6a-6c) entfernbar sind.

2. Werkzeughalter nach Anspruch 1, wobei die Haltemittel (6a-6c) durch eine Halteplatte (11) in Position gehalten werden, die durch zweite elastische Vorspannmittel, die durch die Rotationsspindel (7) eingeschränkt sind, gegen den revolverartigen Körper (2) gedrückt wird.

3. Werkzeughalter nach Anspruch 2, wobei die Halteplatte (11) um die Rotationsspindel (7) drehbar montiert ist.

4. Werkzeughalter nach Anspruch 3, wobei die Halteplatte (11) eine Sternform mit Armen (11a-11b) in einer Anzahl aufweist, die gleich der Anzahl von Werkzeugen (4a-4c) ist.

5. Werkzeughalter nach Anspruch 2, 3 oder 4, wobei die Werkzeughaltemittel (6a-6c) entfernbare Nieten sind, die durch die Halteplatte (11) in jeweilige Sitzlöcher eingesetzt gehalten werden.

6. Werkzeughalter nach einem der vorhergehenden Ansprüche, wobei der revolverartige Körper (2) von einer polygonalen Form ist und die Werkzeuge (4a-4c) an den Scheitelpunkten einer polygonalen Form hält.

7. Werkzeughalter nach einem der vorhergehenden Ansprüche, wobei die Rotationsspindel (7) mit einem Durchgangsloch (8) der Trägerbasis (1) in Eingriff steht und mit einem Haltering (9) auf einer Rückseite der Trägerbasis (1) ausgestattet ist.

8. Werkzeughalter nach einem der vorhergehenden Ansprüche, wobei die ersten elastischen Vorspannmittel in der Form einer Schraubenfeder (10) sind, die zwischen einem Kopf (7a) der Rotationsspindel (7) und einer Flanschbuchse (12) eingeschränkt ist.

9. Werkzeughalter nach Anspruch 2, wobei die ersten elastischen Vorspannmittel (10) und die zweiten elastischen Vorspannmittel übereinstimmen.

## Revendications

1. Porte-outil pour une machine de gravure manuelle, comprenant un élément porteur (C) équipé d'au moins un corps de type revolver (2) monté à rotation par rapport à une base de support (1) à l'aide d'une broche de rotation de serrage (7) et équipé d'une pluralité d'outils de gravure (4a-4c) fixer à l'aide de moyens de retenue d'outils (6a-6c), **caractérisé en ce que**
ledit corps de type revolver (2) est déplaçable axialement par rapport audit corps de support (1) et poussé contre ledit corps de support (1) par des premiers moyens de sollicitation élastiques (10,12) contraints par ladite broche de rotation (7), **en ce que**
entre ladite base de support (1) et ledit corps de type revolver (2) sont prévus des moyens de couplage empêchant une rotation (la, 2a, 1b, 2b) aptes à être relâchés par le déplacement axial le long de ladite broche de rotation (7), et **en ce que**
lesdits moyens de retenue d'outils (6a-6c) sont amovibles.

2. Porte-outil comme dans la revendication 1, dans lequel lesdits moyens de retenue (6a-6c) sont maintenus en position par une plaque de retenue (11) poussée contre ledit corps de type revolver (2) par des deuxièmes moyens de sollicitation élastiques contraints par ladite broche de rotation (7).

3. Porte-outil comme dans la revendication 2, dans lequel ladite plaque de retenue (11) est montée à rotation autour de ladite broche de rotation (7).

4. Porte-outil comme dans la revendication 3, dans lequel ladite plaque de retenue (11) à une forme d'étoile avec des bras (11a-11b) en nombre égal au nombre d'outils (4a-4c).

5. Porte-outil comme dans la revendication 2, 3 ou 4, dans lequel lesdits moyens de retenue d'outil (6a-6c) sont des rivets amovibles maintenus insérés dans des trous d'appui respectifs par la plaque de retenue (11).

6. Porte-outil comme dans l'une quelconque des revendications précédentes, dans lequel ledit corps de type revolver (2) est de forme polygonale et tient lesdits outils (4a-4c) aux sommets d'une forme polygonale.

7. Porte-outil comme dans l'une quelconque des revendications précédentes, dans lequel ladite broche de rotation (7) est engagée avec un trou traversant (8) de ladite base de support (1) et est équipée d'une bague de tenue (9) sur un côté arrière de ladite base de support (1).

8. Porte-outil comme dans l'une quelconque des revendications précédentes, dans lequel lesdits premiers moyens de sollicitation élastiques sont en forme de ressort hélicoïdal (10) contraint entre une tête (7a) de ladite broche de rotation (7) et une douille à collet (12).

9. Porte-outil comme dans la revendication 2, dans lequel lesdits premiers moyens de sollicitation élastiques (10) et lesdits deuxièmes moyens de sollicitation élastiques coïncident.
